# EUROPEAN PATENT APPLICATION

(11) **EP 3 705 376 A1**
(43) Date of publication of application: **09.09.2020**
(21) Application number: 20161168.8
(22) Date of filing: 05.03.2020
(51) Int. Cl.: B62D 5/04

(54) **AUXILIARY ELECTRIC SOURCE DEVICE AND STEERING DEVICE**

(30) Priority: 08.03.2019 JP 2019042393
(71) Applicant: JTEKT CORPORATION, Chuo-ku, Osaka-shi, Osaka 542-8502 (JP)
(72) Inventor: SHINODA, Satoshi, Osaka-shi,, Osaka 542-8502 (JP); SUGIYAMA, Toyoki, Osaka-shi,, Osaka 542-8502 (JP)
(74) Representative: Winter, Brandl, Fürniss, Hübner, Röss, Kaiser, Polte - Partnerschaft mbB

(57) **Abstract**

An auxiliary electric source device (40) is provided on an electric feed path between a main electric source (60) and an electric feed object of the main electric source (60). The auxiliary electric source device (40) includes an auxiliary electric source (100). The electric feed object performs a minimal action of fulfilling a desired minimal function with electric feed from the auxiliary electric source (100) when the main electric source (60) has broken down. An electric source performance of the auxiliary electric source (100) is set based on an electric power necessary for the minimal action.

## Description

### BACKGROUND OF THE INVENTION

### 1. Field of the Invention

The invention relates to an auxiliary electric source device and a steering device.

### 2. Description of Related Art

As a device that causes an electric feed object to act with electric feed from a main electric source and thereby fulfill a desired function, for example, there is a device that causes a motor to act with the electric feed from the main electric source and thereby fulfill a function to give rotation power of the motor to a steering mechanism of a vehicle as steering assist power in order to assist a steering operation by a driver (Japanese Patent Application Publication No. 2018-196203 (JP 2018-196203 A)).

In JP 2018-196203 A, there is provided an auxiliary electric source device including an auxiliary electric source that backs up the electric feed from the main electric source in order to maintain the function to give the steering assist power in the case where the main electric source breaks down and the electric feed from the main electric source to the motor is impossible.

### SUMMARY OF THE INVENTION

In JP 2018-196203 A, in order to fulfill the function to give the steering assist power in the case of the backup of the electric feed from the main electric source, it is necessary to prepare an auxiliary electric source having an electric source performance equivalent to the electric source performance of the main electric source, for maintaining a function equivalent to the function to give the steering assist power with the electric feed from the main electric source. However, for the auxiliary electric source, it is also demanded to restrain increase in electric source performance.

The invention provides an auxiliary electric source device and a steering device that make it possible to restrain the increase in the electric source performance of the auxiliary electric source.

An auxiliary electric source device according to a first aspect of the invention is provided on an electric feed path between a main electric source and an electric feed object of the main electric source. The auxiliary electric source device includes an auxiliary electric source. The electric feed object performs an action of fulfilling a desired function with electric feed from the main electric source, and performs a minimal action of fulfilling a desired minimal function with electric feed from the auxiliary electric source when the main electric source has broken down. An electric source performance of the auxiliary electric source is set based on an electric power necessary for the minimal action.

With the above configuration, when the auxiliary electric source backs up the electric feed from the main electric source in the case where the main electric source has broken down, it is possible to secure the minimal action of the electric feed object with the electric feed from the auxiliary electric source. That is, when the auxiliary electric source backs up the electric feed from the main electric source in the case where the main electric source has broken down, it is possible to fulfill at least the desired minimal function with the electric feed from the auxiliary electric source, although it is not possible to maximally fulfill the desired function. Thereby, when the auxiliary electric source backs up the electric feed from the main electric source in the case where the main electric source has broken down, the electric feed object can fulfill the desired function, even if the electric source performance of the auxiliary electric source is not equivalent to the electric source performance of the main electric source. Accordingly, it is not necessary to prepare an auxiliary electric source having an electric source performance equivalent to the electric source performance of the main electric source, and it is possible to restrain the increase in the electric source performance of the auxiliary electric source.

In the above aspect, the electric source performance of the auxiliary electric source may be set so as to be above a maximal supply voltage of the auxiliary electric source for which noise to be generated at a time of the electric feed from the auxiliary electric source is considered with a supply voltage of the auxiliary electric source necessary for the minimal action when the electric source performance of the auxiliary electric source is below a maximal supply voltage of the main electric source to the electric feed object.

With the above configuration, in the case where the auxiliary electric source performs the electric feed to the electric feed object at the maximal supply voltage, it is possible to secure the minimal action of the electric feed object, even if noise is generated at the time of the electric feed. That is, when the auxiliary electric source backs up the electric feed from the main electric source in the case where the main electric source has broken down, it is possible to fulfill at least the desired minimal function.

In the above configuration, the auxiliary electric source may be configured to change a supply voltage to the electric feed object based on a remaining electric power that is able to be fed to the electric feed object when the electric source performance of the auxiliary electric source is above the supply voltage necessary for the minimal action.

With the above configuration, for example, in the case where the remaining electric power is low, the supply voltage to the electric feed object is decreased. Thereby, in the case where the main electric source has broken down, it is possible to adjust the manner of the backup, for example, by increasing a period for which the electric feed object can fulfill the desired function with the electric feed from the auxiliary electric source in the case where the main electric source has broken down.

A steering device according to a second aspect of the invention includes: the auxiliary electric source device according to the above first aspect; and a motor that performs an action of giving a dynamic power to a steering mechanism of a vehicle, as the desired function. An electric source object of the auxiliary electric source device is the motor.

With the above configuration, the electric source performance of the auxiliary electric source is set such that the minimal function that needs to be fulfilled by the steering device can be secured, and therefore it is possible to realize a steering device in which the increase in the electric source performance of the auxiliary electric source is restrained.

With the auxiliary electric source device and the steering device in the above aspects, it is possible to restrain the increase in the electric source performance of the auxiliary electric source.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing a schematic configuration of a steering device equipped with an auxiliary electric source device;
FIG. 2 is a diagram showing an electric configuration of the auxiliary electric source device;
FIG. 3 is a flowchart showing a processing procedure in an electronic control unit; and
FIG. 4 is a graph showing a relation between a remaining electric power of an auxiliary electric source and a discharge voltage of the auxiliary electric source.

### DETAILED DESCRIPTION OF EMBODIMENTS

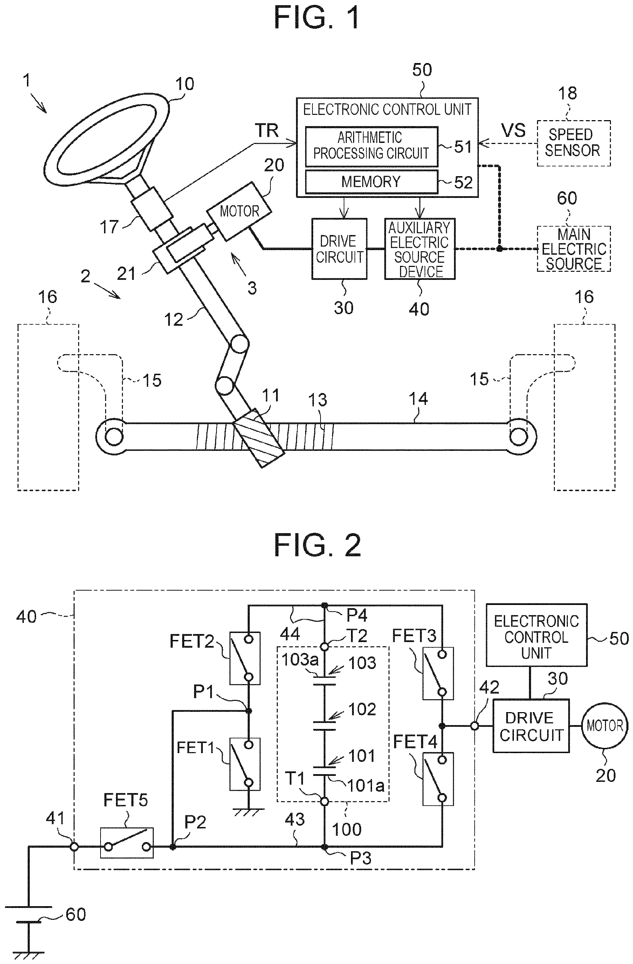

An embodiment in which an auxiliary electric source device is applied to an electric power steering device (referred to as an "EPS" hereinafter) will be described. As shown in FIG 1, an EPS 1 in the embodiment includes a steering mechanism 2 that steers steered wheels 16 based on an operation of a steering wheel 10 by a driver, and an assist mechanism 3 that includes a motor 20 for assisting the steering operation by the driver. The EPS 1 has a function to assist the steering operation by the driver, by giving the motor torque of the motor 20 to the steering mechanism 2 as steering assist power.

The steering mechanism 2 includes a steering shaft 12 having one end at which the steering wheel 10 is fixed and the other end at which a pinion gear 11 is formed, and a rack shaft 14 on which a rack gear 13 that engages with the pinion gear 11 is formed. The pinion gear 11 and the rack gear 13 constitute a rack-and-pinion mechanism. A rotation motion of the steering shaft 12 is transformed into a reciprocal linear motion of the rack shaft 14 in an axial direction of the rack shaft 14, by the rack-and-pinion mechanism. The EPS 1 is incorporated in a vehicle, such that the axial direction of the rack shaft 14 is a vehicle width direction. The reciprocal linear motion of the rack shaft 14 is transmitted to the right and left steered wheels 16 through tie-rods 15 coupled with both ends of the rack shaft 14 respectively. Thereby, steer angles of the steered wheels 16 are changed, and the movement direction of the vehicle is altered.

To the steering shaft 12, a torque sensor 17 is attached. The torque sensor 17 measures a steering torque TR that is applied to the steering shaft 12 by the operation of the steering wheel 10. The torque sensor 17 in the embodiment detects the torsion amount of a torsion bar that constitutes a part of the steering shaft 12, and measures the steering torque TR based on the detected torsion amount.

The assist mechanism 3 includes the motor 20 for steering assist and a reducer 21. The motor 20 is coupled with the steering shaft 12 through the reducer 21. The reducer 21 reduces the rotation of the motor 20, and transmits the reduced rotation power to the steering shaft 12. As the motor 20 in the embodiment, a three-phase brushless motor is employed. As the reducer 21 in the embodiment, a worm gear mechanism is employed.

The EPS 1 includes a drive circuit 30, an auxiliary electric source device 40 and an electronic control unit 50. As the drive circuit 30, a known circuit including two switching elements for each of the phases (U-phase, V-phase and W-phase) of the motor 20 is employed. Each of the auxiliary electric source device 40 and the electronic control unit 50 is connected to a main electric source 60 equipped in the vehicle, at the time when the EPS 1 is incorporated in the vehicle.

The electronic control unit 50 causes the EPS 1 to fulfill a desired function to assist the steering operation by the driver, by controlling the action of the motor 20 that is an electric feed object with the electric feed from the main electric source 60. The electronic control unit 50 includes an arithmetic processing circuit 51 that executes arithmetic processing, and a memory 52 in which programs and data for control are stored. To the electronic control unit 50, the above-described torque sensor 17 and a speed sensor 18 are connected. The speed sensor 18 detects a traveling speed VS of the vehicle. In the control of the steering assist power, the electronic control unit 50 decides a target steering assist power that is a target value of the steering assist power, based on the steering torque TR and the traveling speed VS. The electronic control unit 50 controls actions of the drive circuit 30 and the auxiliary electric source device 40, in order to generate a steering assist power equivalent to the target steering assist power.

As shown in FIG. 2, the auxiliary electric source device 40 includes an input port 41 and an output port 42. The input port 41 is connected to the main electric source 60, at the time when the auxiliary electric source device 40 is incorporated in the EPS 1. The output port 42 is connected to the motor 20 that is the electric feed object, through the drive circuit 30, at the time when the auxiliary electric source device 40 is incorporated in the EPS 1.

The auxiliary electric source device 40 includes a first line 43 that is an electric feed path at the time of a later-described keeping state or charging state. The first line 43 is connected to the input port 41 and the output port 42. The auxiliary electric source device 40 includes an auxiliary electric source 100 that can be charged and discharged with electric power. The auxiliary electric source 100 is connected between the main electric source 60 and the motor 20 that is the electric feed object. The auxiliary electric source 100 is constituted by three capacitors 101, 102, 103. The three capacitors 101, 102, 103 are connected to each other in series. A discharge voltage that is the electric source performance of the auxiliary electric source 100 is the sum of discharge voltages of the three capacitors 101, 102, 103. Maximal discharge voltages that are electric source performances of the three capacitors 101, 102, 103 are equal to each other. Each of the capacitors 101, 102, 103 includes an electrode plate having a positive polarity and an electrode plate having a negative polarity. A first terminal T1 of an electrode plate 101a on the negative side of the capacitor 101 is connected to the first line 43, and a second terminal T2 of an electrode plate 103a on the positive side of the capacitor 103 is connected to a second line 44 that is an electric feed path at the time of a later-described backup or boost. The first terminal T1 on the electrode plate 101a on the negative side of the capacitor 101 is connected to the input port 41 through a fifth switching element (referred to as a "FET5" hereinafter), on the first line 43. When the auxiliary electric source 100 is viewed as a whole, the charge of the auxiliary electric source 100 with electric power is performed between the electrode plate 101a on the negative side of the capacitor 101 and the electrode plate 103a on the positive side of the capacitor 103. In the embodiment, as each of the capacitors 101, 102, 103, a lithium-ion capacitor is employed. The lithium-ion capacitor has advantages of high heat resistance, long life, high charge-discharge performance, high energy density and high safety.

The auxiliary electric source device 40 includes a first switching element (referred to as a "FET1" hereinafter) and a second switching element (referred to as a "FET2" hereinafter). One end of the FET1 is connected to the ground, and the other end of the FET1 is connected to the second line 44 through the FET2.

The auxiliary electric source device 40 includes a third switching element (referred to as a "FET3" hereinafter) for switching connection between the second line 44 and the motor 20 and a fourth switching element (referred to as a "FET4" hereinafter) for switching connection between the first line 43 and the motor 20. The FET3 is provided between the FET2 and the output port 42 on the second line 44. The FET4 is provided between the FET5 and the output port 42 on the first line 43. A connection point P2 between the FET5 and the FET4 on the first line 43 is connected to a connection point P1 between the FET1 and the FET2. A connection point P3 between the connection point P2 and the FET4 on the first line 43 is connected to the first terminal T1 of the electrode plate 101a on the negative side of the capacitor 101. A connection point P4 between the FET2 and the FET3 on the second line 44 is connected to the second terminal T2 of the electrode plate 103a on the positive side of the capacitor 103.

As each of the FET1 to FET5, a metal-oxide-semiconductor field-effect transistor (MOS-FET) is employed. Gates of the FET1 to FET5 are connected to the electronic control unit 50. The electronic control unit 50 outputs drive signals to the gates of the FET1 to FET5, and thereby switches the FET1 to FET5 between an on-state and an off-state depending on the drive signals. By switching the FET1 to FET5 between the on-state and the off-state, the electronic control unit 50 switches the action state of the auxiliary electric source 100 among the keeping state, the charging state and a discharging state.

The keeping state is an action state for keeping the electric power of the auxiliary electric source 100. When the electronic control unit 50 switches the action state of the auxiliary electric source 100 to the keeping state, the electronic control unit 50 puts the FET1 to FET3 into the off-state, and puts the FET4 and FET5 into the on-state. In this case, the main electric source 60 is connected to the motor 20 through the first line 43. Thereby, electric power is fed to the motor 20, based on a battery voltage Vb that is an electric feed voltage from the main electric source 60. The electric power of the auxiliary electric source 100 is kept.

The charging state is an action state for charging the auxiliary electric source 100 with electric power. When the electronic control unit 50 switches the action state of the auxiliary electric source 100 to the charging state, the electronic control unit 50 puts the FET3 into the off-state, puts the FET4 and FET5 into the on-state, and performs PWM drive of the FET1 and FET2, such that the FET1 and the FET2 alternately become the off-state. Thereby, electric charges are stored in the capacitors 101, 102, 103, so that the auxiliary electric source 100 is charged with electric power.

The discharging state is an action state for discharging the auxiliary electric source 100 with electric power. When the electronic control unit 50 switches the action state of the auxiliary electric source 100 to the discharging state, the electronic control unit 50 puts the FET1, FET2 and FET4 into the off-state and puts the FET3 and FET5 into the on-state, or the electronic control unit 50 puts the FET2, FET4 and FET5 into the off-state and puts the FET1 and FET3 into the on-state.

Specifically, in the case where the electronic control unit 50 puts the FET1, FET2 and FET4 into the off-state and puts the FET3 and FET5 into the on-state, the first terminal T1 of the auxiliary electric source 100 is connected to the connection point P3 of the first line 43, and is connected to the main electric source 60 through the first line 43 and the FET5. The second terminal T2 of the auxiliary electric source 100 is connected to the drive circuit 30 and the motor 20 through the second line 44 and the FET3. That is, the auxiliary electric source 100 is connected to the main electric source 60 in series between the main electric source 60 and the motor 20, and the battery voltage Vb of the main electric source 60 is boosted. Thereby, electric power is fed to the motor 20, based on the boosted battery voltage Vb of the main electric source 60. That is, the discharging state in the case where the FET1, FET2 and FET4 are put into the off-state is a discharging state at the time of a boost in which the battery voltage Vb of the main electric source 60 is boosted.

In the case where the electronic control unit 50 puts the FET2, FET4 and FET5 into the off-state and puts the FET1 and FET3 into the on-state, the first terminal T1 of the auxiliary electric source 100 is connected to the connection points P1 to P3, and is connected to the ground through the FET1. The second terminal T2 of the auxiliary electric source 100 is connected to the output port 42 through the FET3. In this case, the main electric source 60 is isolated from the motor 20, and the auxiliary electric source 100 is connected to the motor 20. Thereby, the electric power of the auxiliary electric source 100 is fed to the motor 20. That is, the discharging state in the case where the FET2, FET4 and FET5 are put into the off-state and the FET1 and FET3 are put into the on-state is a discharging state at the time of a backup in which the auxiliary electric source 100 backs up the electric feed from the main electric source 60. The action state is switched to the discharging state at the time of the backup, when the main electric source 60 has broken down, for example, due to disconnection between the main electric source 60 and the input port 41 and decrease in the battery voltage Vb caused by degradation of the main electric source 60.

Next, the electric source performance of the auxiliary electric source 100 will be described. The maximal discharge voltage that is the electric source performance of the auxiliary electric source 100 is set based on an electric power that is necessary for the motor 20 to perform a minimal action in order for the EPS 1 to fulfill a minimal function.

In the embodiment, the minimal function to be fulfilled by the EPS 1 is a function to assist the steering operation by the driver in the case where the vehicle performs an ordinary traveling at a speed in an ordinary speed region that is a certain level of speed. This is because the minimal function is important for assisting the steering operation by the driver from the standpoint of the securement of the safety of the driver. The case where the vehicle performs the ordinary traveling is a case where the vehicle performs a grip traveling.

It is desirable to assist the steering operation by the driver, even in the case where the vehicle performs a low-speed traveling at a relatively low speed, for example, in the case of the stop of the vehicle. However, from the standpoint of the securement of the safety of the driver, it is thought that the priority is low compared to the case where the vehicle performs the ordinary traveling. Therefore, in the embodiment, in the case of the breakdown of the main electric source 60, for example, in the case of the discharging state at the time of the backup, the assist of the steering operation by the driver in the case where the vehicle performs the ordinary traveling as the minimal function that needs to be fulfilled by the EPS 1 is preferentially secured.

A so-called static steering operation, which is a steering operation in the case where the vehicle performs the low-speed traveling, requires a higher power for the steering operation because of a higher frictional force between the steered wheels 16 and a road surface, compared to the steering operation in the case where the vehicle performs the ordinary traveling. Therefore, in the case where the vehicle performs the low-speed traveling, the motor torque that needs to be given to the steering mechanism 2 as the steering assist power is higher than in the case where the vehicle performs the ordinary traveling. That is, in the case where the vehicle performs the low-speed traveling, the electric power that needs to be fed to the motor 20 for giving the steering assist power is higher.

Thereby, in the embodiment, the electric source performance of the auxiliary electric source 100, which is an electric source to be used for minimally securing the function to assist the steering operation by the driver in the case where the vehicle performs the ordinary traveling, is set so as to be lower than the electric source performance of the main electric source 60, which is an electric source to be used for securing also the function to assist the steering operation in the case where the vehicle performs the low-speed traveling.

Specifically, when a supply voltage Vmin is defined as a minimal supply voltage for feeding an electric power that is necessary for the motor 20 to perform the minimal action, the maximal supply voltage Vmax that is fed to the motor 20 by the auxiliary electric source 100 is set to a voltage resulting from adding a surplus voltage Vsu for which noise to be generated at the time of the electric feed from the auxiliary electric source 100 is considered, to the minimal supply voltage Vmin. Further, the maximal discharge voltage of the auxiliary electric source 100 is set so as to be above the maximal supply voltage Vmax.

For example, the maximal supply voltage Vmax is set to 90% of the maximal discharge voltage of the auxiliary electric source 100. That is, when the minimal supply voltage Vmin is 9 V and the surplus voltage Vsu is 0.7 V, the maximal supply voltage Vmax is 9.7 V. In this case, the maximal discharge voltage of the auxiliary electric source 100 is 10.8 V (9.7 V / 0.9). That is, as the capacitors, three cells in each of which the maximal discharge voltage is 3.6 V (10.8 V / 3) are employed.

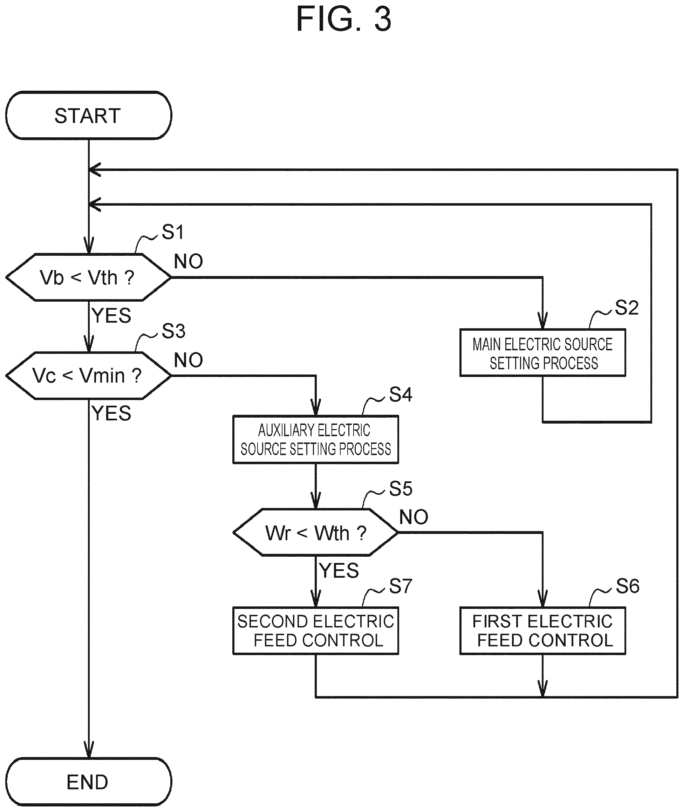

FIG. 3 shows a processing procedure in the electronic control unit 50, mainly for the switching of the action state to the discharging state at the time of the backup. The process shown in FIG. 3 is realized when the arithmetic processing circuit 51 repeatedly executes a program stored in the memory 52 of the electronic control unit 50 with a predetermined period. The electronic control unit 50 executes the following process after a control start when an ignition switch is turned on and before a control end when the ignition switch is turned off. Here, it is assumed that the main electric source 60 has not broken down at the time of the control start.

As shown in FIG. 3, the electronic control unit 50 determines whether the battery voltage Vb is lower than a threshold Vth (step S1). The threshold Vth is set to a value in a voltage range that is decided based on a specification of the electric feed object. For example, when the operating voltage of the electronic control unit 50 is 9 to 11 V, the threshold Vth is set to 9 V.

In the case where the battery voltage Vb is equal to or higher than the threshold Vth (NO in step S1), the electronic control unit 50 determines that the main electric source 60 has not broken down, and executes a main electric source setting process (step S2). The main electric source setting process is a process for setting the main electric source 60 as the electric source that is used for the action of the motor 20. In this case, the electronic control unit 50 switches the action state of the auxiliary electric source 100, to the keeping state, the charging state or the discharging state at the time of the boost. After completion of the main electric source setting process, the electronic control unit 50 returns to the process of step S1 again.

In the case where the battery voltage Vb is lower than the threshold Vth (YES in step S1), the electronic control unit 50 determines that the main electric source 60 has broken, and determines whether the supply voltage Vc is lower than the minimal supply voltage Vmin in the auxiliary electric source 100 (step S3). The supply voltage Vc is a supply voltage that is actually being supplied to the motor 20 by the auxiliary electric source 100, and is the voltage value at the connection point P4 on a higher potential side of the auxiliary electric source 100.

In the case where the supply voltage Vc is lower than the minimal supply voltage Vmin in the auxiliary electric source 100 (YES in step S3), the electronic control unit 50 determines that the auxiliary electric source 100 cannot feed the electric power that is necessary for the motor 20 to perform the minimal action, and ends the process shown in FIG. 3. In this case, the auxiliary electric source 100 cannot be switched to the action state at the time of the backup, and therefore a predetermined fail-safe process is executed.

In the case where the supply voltage Vc is equal to or higher than the minimal supply voltage Vmin in the auxiliary electric source 100 (NO in step S3), the electronic control unit 50 determines that the auxiliary electric source 100 can feed the electric power that is necessary for the motor 20 to perform the minimal action, and executes an auxiliary electric source setting process (step S4). The auxiliary electric source setting process is a process for setting the auxiliary electric source 100 as the electric source that is used for the action of the motor 20. In this case, the electronic control unit 50 switches the action state of the auxiliary electric source 100 to the discharging state at the time of the backup.

After completion of the process of step S4, the electronic control unit 50 determines whether a remaining electric power Wr is lower than an electric power threshold Wth in the auxiliary electric source 100 (step S5). In the embodiment, the voltage value at the connection point P4 on the higher potential side of the auxiliary electric source 100 is used as the remaining electric power Wr. The electric power threshold Wth is set to the same value as the maximal supply voltage Vmax of the auxiliary electric source 100.

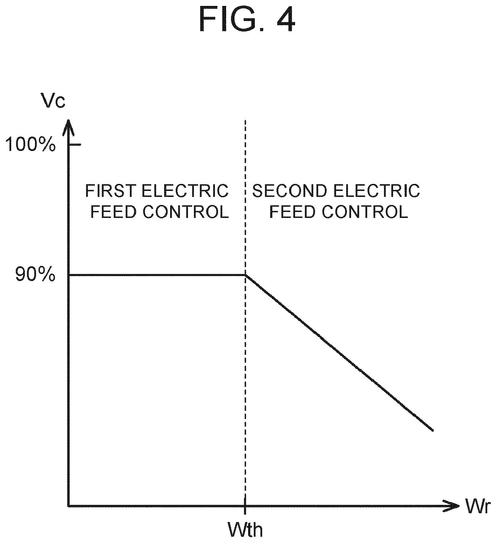

In the case where the remaining electric power Wr is equal to or higher than the electric power threshold Wth in the auxiliary electric source 100 (NO in step S5), the electronic control unit 50 determines that the remaining electric power Wr of the auxiliary electric source 100 is sufficient, and executes a first electric feed control (step S6). As shown in FIG. 4, in the first electric feed control, the supply voltage Vc of the auxiliary electric source 100 is set as the maximal supply voltage Vmax. As shown in FIG 4, the supply voltage Vc is lower as the remaining electric power Wr is higher.

In the case where the remaining electric power Wr is lower than the electric power threshold Wth in the auxiliary electric source 100 (YES in step S5), the electronic control unit 50 determines that the remaining electric power Wr of the auxiliary electric source 100 is insufficient, and executes a second electric feed control (step S7). As shown in FIG. 4, in the second electric feed control, the maximal supply voltage Vmax is adopted as the upper limit of the supply voltage Vc of the auxiliary electric source 100, and the supply voltage Vc is set to a lower value as the remaining electric power Wr is lower.

Operations and effects of the embodiment will be described. For example, in the case where the battery voltage Vb of the main electric source 60 is 12 V, the auxiliary electric source 100 needs to be constituted by four capacitors in each of which the maximal discharge voltage is 3.6 V, for preparing the auxiliary electric source 100 having an electric source performance equivalent to the electric source performance of the main electric source 60.

In response, in the embodiment, even in the case where the battery voltage Vb of the main electric source 60 is 12 V, it is only necessary to prepare the auxiliary electric source 100 having an electric source performance of 9 V as the minimal supply voltage Vmin. Therefore, the auxiliary electric source 100 only needs to be constituted by three capacitors in each of which the maximal discharge voltage is 3.6 V.

Therefore, in the embodiment, when the auxiliary electric source 100 backs up the electric feed from the main electric source 60 in the case where the main electric source 60 has broken down, it is possible to secure the minimal action of the motor 20 with the electric feed from the auxiliary electric source 100. That is, when the auxiliary electric source 100 backs up the main electric source 60 in the case where the main electric source 60 has broken down, it is possible to fulfill at least the desired minimal function with the electric feed from the auxiliary electric source 100, although it is not possible to maximally fulfill the desired function. Thereby, when the auxiliary electric source 100 backs up the electric feed from the main electric source 60 in the case where the main electric source 60 has broken down, it is possible to fulfill the desired function of the motor 20, even if the discharge voltage that is the electric source performance of the auxiliary electric source 100 is not equivalent to the battery voltage Vb that is the electric source performance of the main electric source 60. Accordingly, it is not necessary to prepare the auxiliary electric source 100 having an electric source performance equivalent to the electric source performance of the main electric source 60, and it is possible to restrain the increase in the electric source performance of the auxiliary electric source 100.

As described above, in the embodiment, it is possible to decrease the number of capacitors that constitute the auxiliary electric source 100, and it is possible to decrease the number of parts of the auxiliary electric source device 40 and to reduce the cost, compared to the case of preparing the auxiliary electric source 100 having an electric source performance equivalent to the electric source performance of the main electric source 60. In this case, in addition to the decrease in the number of capacitors that constitute the auxiliary electric source 100, it is possible to decrease the number of balancing circuits that have a function to adjust the discharge voltages of the capacitors.

In the case where the auxiliary electric source 100 performs the electric feed to the motor 20 at the maximal supply voltage Vmax, it is possible to secure the minimal action of the motor 20, even if the noise is generated at the time of the electric feed. That is, when the auxiliary electric source 100 backs up the electric feed from the main electric source 60 in the case where the main electric source 60 has broken down, it is possible to fulfill at least the desired minimal function.

In the case where the remaining electric power Wr is lower than the electric power threshold Wth and the remaining electric power Wr is relatively low in the auxiliary electric source 100, the auxiliary electric source 100 can maintain the discharging state at the time of the backup, for a longer time, by setting the supply voltage Vc to a lower value as the remaining electric power Wr is lower.

The electric source performance of the auxiliary electric source 100 is set so as to allow the securement of the minimal function that needs to be fulfilled by the EPS 1 to assist the steering operation by the driver in the case where the vehicle performs the ordinary traveling, and therefore it is possible to realize the EPS 1 in which the increase in the electric source performance of the auxiliary electric source 100 is restrained.

In the embodiment, the discharge voltage of the auxiliary electric source 100 is set so as to be above the maximal supply voltage Vmax, and therefore the auxiliary electric source 100 can maintain the discharging state at the time of the backup, for a longer time, even if the maximal supply voltage Vmax is maintained.

The embodiment may be modified as follows. The following other embodiments can be combined with each other, in a range in which there is no technical inconsistency. In the processing procedure shown in FIG. 3, in steps S5 to S7, the supply voltage Vc of the auxiliary electric source 100 can be changed based on the remaining electric power Wr. However, the supply voltage Vc may be constant regardless of the change in the remaining electric power Wr, or may be set to a lower value as the remaining electric power Wr is lower. In this case, step S5 can be removed.

The discharge voltage of the auxiliary electric source 100 is set so as to be above the maximal supply voltage Vmax. However, the discharge voltage of the auxiliary electric source 100 may be set so as to be equal to the maximal supply voltage Vmax. The discharge voltage of the auxiliary electric source 100 is set to the voltage resulting from adding the surplus voltage Vsu for which the noise is considered to the minimal supply voltage Vmin. However, the discharge voltage of the auxiliary electric source 100 only needs to be set to a value equal to or higher than the minimal supply voltage Vmin.

The example in which the maximal supply voltage Vmax is 90% of the maximal discharge voltage of the auxiliary electric source 100 has been shown. However, the maximal supply voltage Vmax may be altered to a value lower than 90% of the maximal discharge voltage of the auxiliary electric source 100 or a value equal to or higher than 90% of the maximal discharge voltage of the auxiliary electric source 100. For example, in the case where the maximal supply voltage Vmax is altered to a value lower than 90% of the maximal discharge voltage of the auxiliary electric source 100, the auxiliary electric source 100 can maintain the discharging state at the time of the backup, for a longer time, than in the case where the maximal supply voltage Vmax is 90% of the maximal discharge voltage of the auxiliary electric source 100.

In the case where the lowest operating voltage of the electronic control unit 50 is 9 V, various setting values are set so as to correspond to 9 V However, in the case where the lowest operating voltage is 8 V, the various setting values may be set so as to correspond to 8 V

The electronic control unit 50 switches the action state of the auxiliary electric source 100 to the discharging state at the time of the backup, when the main electric source 60 has broken down. However, even when the main electric source 60 has not broken down, the electronic control unit 50 may preliminarily switch the action state of the auxiliary electric source 100 to the discharging state at the time of the backup, before the main electric source 60 has broken down.

In the above embodiment, the number of capacitors that constitute the auxiliary electric source 100 can be altered to an appropriate number, for example, to two, four or more, or the like, depending on the electric source performance necessary for the securement of the minimal function that needs to be fulfilled by the EPS 1. The number of capacitors that constitute the auxiliary electric source 100 is altered also depending on the maximal discharge voltage of a capacitor to be used.

The auxiliary electric source 100 may be constituted by a single capacitor. Also with the modification, it is possible to restrain the increase in the electric source performance of the auxiliary electric source 100. In this case, it is possible to decrease the electric source performance of the capacitor that constitutes the auxiliary electric source 100, and to reduce the cost of the auxiliary electric source device 40, compared to the case of preparing the auxiliary electric source 100 having an electric source performance equivalent to the electric source performance of the main electric source 60. Further, since the auxiliary electric source 100 is constituted by a single capacitor, it is unnecessary to provide the balancing circuit that has a function to adjust the discharge voltages of a plurality of capacitors.

In the embodiment, the electric source performance of the auxiliary electric source 100 to be set for securing the minimal function that needs to be fulfilled by the EPS 1 is the maximal discharge voltage. However, the electric source performance of the auxiliary electric source 100 may be the electric source capacity of the auxiliary electric source 100, or may be the electric current value of the auxiliary electric source 100.

In the embodiment, as each of the capacitors 101, 102, 103, the lithium-ion capacitor is used. However, each of the capacitors 101, 102, 103 is not limited to the lithium-ion capacitor. That is, each of the capacitors 101, 102, 103 may be an electric double layer capacitor (EDLC), a lithium-ion battery or a lead storage battery.

Some or all of the switching elements (FET1 to FET5) may be constituted by switching elements other than the MOS-FET. Examples of the switching element other than the MOS-FET include an insulated gate bipolar transistor (IGBT).

The motor 20 is not limited to the three-phase brushless motor. For example, the motor 20 may be a brush motor. In the embodiment, the EPS 1 to which the auxiliary electric source device 40 is applied is configured as an EPS in which the motor 20 is coupled with the steering shaft 12 through the reducer 21. However, the EPS 1 may be configured as an EPS in which the motor 20 is coupled with the rack shaft 14 through the reducer 21. Further, without being limited to the EPS to which the auxiliary electric source device 40 is applied, the auxiliary electric source device 40 may be applied to a steer-by-wire steering device, for example.

The auxiliary electric source device 40 may be applied to an uninterruptible power supply, may be equipped in an unmanned transport vehicle, may be equipped in an overhead wire, or may be equipped in an industrial machine.

## Claims

1. An auxiliary electric source device (40) that is provided on an electric feed path between a main electric source (60) and an electric feed object of the main electric source (60), the auxiliary electric source device (40) **characterized by** comprising an auxiliary electric source (100), wherein:
the electric feed object performs an action of fulfilling a desired function with electric feed from the main electric source (60), and performs a minimal action of fulfilling a desired minimal function with electric feed from the auxiliary electric source (100) when the main electric source (60) has broken down; and
an electric source performance of the auxiliary electric source (100) is set based on an electric power necessary for the minimal action.

2. The auxiliary electric source device (40) according to claim 1, **characterized in that** the electric source performance of the auxiliary electric source (100) is set so as to be above a maximal supply voltage of the auxiliary electric source for which noise to be generated at a time of the electric feed from the auxiliary electric source (100) is considered with a supply voltage of the auxiliary electric source necessary for the minimal action when the electric source performance of the auxiliary electric source (100) is below a maximal supply voltage of the main electric source (60) to the electric feed object.

3. The auxiliary electric source device (40) according to claim 2, **characterized in that** the auxiliary electric source (100) is configured to change a supply voltage to the electric feed object based on a remaining electric power that is able to be fed to the electric feed object when the electric source performance of the auxiliary electric source (100) is above the supply voltage necessary for the minimal action.

4. A steering device (1) **characterized by** comprising:
the auxiliary electric source device (40) according to any one of claims 1 to 3; and
a motor (20) that performs an action of giving a dynamic power to a steering mechanism (2) of a vehicle, as the desired function, wherein
an electric feed object of the auxiliary electric source device (40) is the motor (20).
